# EUROPÄISCHE PATENTSCHRIFT

(11) **EP 1 695 045 B1**
(45) Veröffentlichungstag und Bekanntmachung des Hinweises auf die Patenterteilung: **14.11.2018**
(21) Anmeldenummer: 04804817.7
(22) Anmeldetag: 14.12.2004
(51) Int. Cl.: G01F 23/284, G01S 13/02, G01S 13/10, G01S 13/88

(54) **VORRICHTUNG ZUR OPTIMIERUNG DER EMISSION BEI PULSECHOVERFAHREN**
DEVICE FOR OPTIMIZING THE EMISSION IN PULSE ECHO METHODS
DISPOSITIF POUR OPTIMISER L'EMISSION DANS DES METHODES PAR ECHO D'IMPULSION

(30) Priorität: 17.12.2003 DE 10359534
(43) Veröffentlichungstag der Anmeldung: 30.08.2006
(73) Patentinhaber: Endress+Hauser SE+Co. KG, 79689 Maulburg (DE)
(72) Erfinder: MICHALSKI, Bernhard, 79689 Maulburg (DE)
(74) Vertreter: Andres, Angelika Maria
(86) Internationale Anmeldenummer: PCT/EP2004/053459
(87) Internationale Veröffentlichungsnummer: WO 2005/062002

(56) Entgegenhaltungen:
- EP-A- 0 449 590
- DE-A1- 10 007 187
- DE-A1- 10 049 906
- GB-A- 2 238 439
- US-A- 5 075 863

## Beschreibung

Die Erfindung betrifft eine Vorrichtung zur Optimierung der Emission bei Pulsechoverfahren mit elektromagnetischen Signalen. Die Erfindung betrifft insbesondere eine Vorrichtung zur Optimierung der Emission bei breitbandigen Pulsradarverfahren, wie sie in der industriellen Messtechnik im Rahmen einer Prozeßautomatisation zur genauen Entfernungsbestimmung fester und beweglicher Ziele verwendet werden.

Ein bekanntes Pulsradarverfahren ist beispielsweise die kontinuierliche Bestimmung eines Füllstands eines Mediums in einem Behälter oder Tank. In der industriellen Prozeßmeßtechnik werden solche Messungen mit Pulsradarsignalen durchgeführt, die von einem meist oben im Tank oder Behälter angebrachten Messgerät, auch Transmitter genannt, zum Medium gesendet werden. Die Signale werden vom Medium reflektiert und als so genannte Echosignale vom Messgerät empfangen. Prinzipiell wird bei diesem Verfahren mittels einer Sendeimpulsfolge und einer Abtastimpulsfolge mit einer geringfügig unterschiedlichen Impulswiederholfrequenz ein zeittransformiertes Zwischenfrequenzsignal erzeugt. Dieses Zwischenfrequenzsignal wird verstärkt, demoduliert und auf die Laufzeit des Messsignals hin ausgewertet. Aus der Laufzeit eines Messsignals wird die Entfernung zwischen Messgerät und Medium bestimmt, woraus dann in Kenntnis der Geometrie des Behälters oder Tanks der gesuchte Füllstand ermittelt wird.

Sinnvollerweise befindet sich das Messgerät oberhalb des Mediums und des höchsten zu erwartenden Füllstands des Mediums im Behälter oder Tank. Pulsradarsignale werden dazu üblicherweise entweder frei vom Messgerät zum Medium emmitiert oder an einem in das Medium eintauchenden Wellenleiter geführt. Die Messgenauigkeit hängt von der Dielektrizitätskonstanten des Mediums, auch DK-Wert genannt, ab.

Die für die beschriebenen Füllstandsmessungen verwendeten Pulsradarsignale sind sehr breitbandig und weisen Sendepulsspektren im Bereich von einigen MHz bis in den GHz-Bereich hinein auf. Sie bereiten jedoch eben darum immer wieder Probleme mit ihren Emissionswerten, die oft bis an die zulässigen Grenzwerte funktechnischer und anderer Zulassungen, wie z.B. beim so genannten CE-Zeichen, gehen. Hersteller von Messgeräten der industriellen Prozeßmeßtechnik, die mit Pulsradarsignalen arbeiten, haben aber normalerweise kein Interesse an einer funktechnischen Zulassung für diese Messgeräte.

Um die Emmissionswerte der Messgeräte mit Pulsradarsignale unterhalb jener Grenzwerte zu halten, ab denen eine funktechnische Zulassung erforderlich ist, sind in der Praxis bisher immer Maßnahmen getroffen worden, die zu Lasten der Messperformance bzw. des Einsatzbereiches in der Anwendung gingen. Einige Maßnahmen zur Herabsetzung der Emission und die damit verbundenen Einschränkungen sind hier nachfolgend genannt:
- Eine Verringerung des Sendepegels führt zu einem entsprechend geringeren Echosignal. Speziell bei großen Messdistanzen und geringen DK-Werten des Mediums sinkt damit jedoch die Sicherheit, ein eindeutiges Echosignal zu erhalten.
- Eine Verringerung der Pulswiderholrate verringert zwar die Emission, verschlechtert aber die Messgeschwindigkeit und/oder die Auflösung der Nutzsignale.

Ist es andererseits nicht möglich, die Emission der zu Füllstandsmessungen verwendeten Pulsradarsignale zu verringern, ist ein Betrieb der betreffenden Messgräte nur in geschlossenen metallischen Behältern oder Tanks möglich, wenn geforderte Emissionsgrenze für Industrieumgebung nicht ausreichend ist. Bei nichtmetallischen Behältern bleibt dann nur noch ein Betrieb mit auf einem Wellenleiter geführten Pulsradarsignalen, wobei der Wellenleiter eine Koaxial-Sonde sein sollte.

Die beschriebenen Probleme sind grundsätzlicher Art, und viele Hersteller von Messgeräten mit Radarpulssignale haben bisher nur unwesentliche Fortschritte gemacht. Außerdem sind Hinweise auf Einschränkungen der Einsatzbedin gungen bezüglich CE-Bestimmungen müssen in der Betriebsanleitung vermerkt werden.

Für Messgeräte mit schmalbandigen Radarsignale wurde bereits eine andere Möglichkeit entwickelt, die Emmissionswerte der Pulsradarsignale zu begrenzen. Die Deutsche Patentschrift DE-4207627-C2 beschreibt, wie eine einzige Frequenz eines schmalbandigen Radarpulssignals, das als Messsignal eines Messgerätes dient, in seiner Phase um 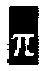 rad im Sinne einer Phasenmodulation verschoben wird. Nach der DE-4207627-C2 wird dazu die Phase der Trägerfrequenz der Radarwellenpulsfolge und die Phase der Abtastimpulsfolge synchron durch die gleiche pseudo-statistische Binärfolge moduliert. Dieses Verfahren führt zu einer Reduktion der hohen Emmissionswerte, genauer: der Spektrallinienleistung durch Umwandlung in eine gleichförmige, niedrige spektrale Leistungsdichte. Es betrifft jedoch nur eine einzelne Frequenz des betrachteten Spektrum und ist somit nicht für breitbandige Radarpulssignalverfahren geeignet, weil es in diesem Falle versagt. Für Füllstandsmessungen in der industriellen Messtechnik werden jedoch breitbandige Radarpulssignale verwendet, die jedoch sehr viele Einzelfrequenzanteile besitzen. Wollte man das Verfahren nach der DE-4207627-C2 darauf anwenden, müsste jeder Frequenzanteil um seine spezifische 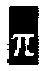 rad verschoben werden, was zu einer jeweils unterschiedlichen Zeitverschiebung führen würde. Damit ist das Verfahren nach der DE-4207627-C2 für industrielle Füllstandsmesstechnik mit breitbandige Pulsradarsignalen ungeeignet.

Weiterhin ist von Füllstandsmessungen mit breitbandigen Radarpulssignalen bekannt, dass sich bei sehr kurzen Nadelimpulsen das Störspektrum über mehrere Frequenzdekaden von einigen MHz bis zu einigen GHz erstrecken kann, so dass je nach Signalform, Amplitude und Pulswiederholungsfrequenz die zulässigen bzw. erwünschten Emmissionswerte leicht überschritten werden können. Um den Emmissionspegel zu minimieren, ist versucht worden, die Pulswiederholungsfrequenz zu modulieren bzw. mit einem Phasenjitter zu versehen. Aber besonders bei rein digital aufgebauten Füllstandsmessgeräten, bei denen die Pulswiederholungsfrequenz von einem Quarz gesteuert ist, ist dies mit erhöhtem Aufwand verbunden, weil analoge Komponenten benötigt

Beispiele für weitere derartige Messgeräte sind in der GB 2 238 439 A, der US 5 075 863 A1, der DE 100 49 906 A1 und der DE 100 07 187 A1 detailliert beschrieben.

Der Erfindung liegt daher die Aufgabe zugrunde, eine Vorrichtung zur Optimierung der Emission bei breitbandigen Pulsradarverfahren anzugeben, die die oben angegeben Nachteile vermeidet und die auch die Verwendung einer in der industriellen Messtechnik üblichen Quarz-genauen Pulswiederholungsfrequenz ermöglicht.

Diese Aufgabe wird durch ein Füllstandsmessgerät zur Bestimmung des Füllstands eines Mediums in einem Behälter mit den im Anspruch 1 eingegebenen Merkmalen gelöst.

Bei einer besonderen Ausführung ist die Pulsrepetitionfrequenz konstant.

Bei einer anderen Ausführung ist die Pulsrepetitionfrequenz zusätzlich verjittert.

Noch eine andere Ausführung arbeitet mit Sendepulsen mit beliebiger Pulsform.

Bei einer anderen Ausführung umfasst die PN-Codegeneratorschaltung mehrstufiges Schieberegister mit Rückkoppelabgriffen.

Eine weitere Ausführungsform umfasst eine XOR-Verknüpfung für die Rückkoppelabgriffe.

Grundsätzlich liegt der Erfindung die Erkenntnis zugrunde, dass eine Verschiebung eines breitbandigen Signals um 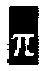 nichts anderes ist, als eine Umpolung des br eitbandigen Signals, bzw. eine Multiplikation des Signals mit dem Faktor Eine solche Umpolung eines breitbandigen Signals insbesondere eines solchen für industrielle Messverfahren ist nach der Erfindung sicher zu realisieren. Besonders die Ausführungen der Schaltung mit Schieberegistern zur Erzeugung der Zufallsfolge, die die Umschaltung der Polarität kontrolliert und die Polarität sozusagen codiert wird, ermöglicht eine exakte Periodizität der Sendesignale und damit einen reproduzierbar günstigen Effekt auf die Emmissionswerte. Je größer die Anzahl der verwendeten Schieberegister, desto länger die Zeit, bis sich die Serie der optimierten Sendesignale wiederholt.

Ein weitere Vorteil der Erfindung ist darin zu sehen, dass sie die Verwendung einer beliebigen Signalform eines Pulsradarsignals erlaubt, da die erfindungsgemäße Codierung der Polarität der Sendesignale unabhängig von deren Signalform geschieht.

Insgesamt ist festzustellen, dass der Emissionswert breitbandiger Pulsradarsignale mit der erfindungsgemäßen Polaritätscodierung des Sendepulses wesentlich minimiert wird, obwohl der Sendepegel und/oder die Pulswiderholrate zusätzlich gesteigert werden kann. Dies führt bei Messverfahren, insbesondere bei Füllstandsmessungen mit Pulsradarverfahren zu einer Erhöhung der Messperformance und bietet zusätzlich den Vorteil, dass eine Unterscheidung der Einsatzfähigkeit für metallische Behälter oder Freifeld einfacher wird. Damit sind auch Füllstandsmessungen mit breitbandigen Pulsradarsignalen in Glas- oder Kunststoffbehältern möglich, die mit bisher üblichen breitbandigen Pulsradarsendesignalen wegen zu starker Emmissionswerte nicht durchführbar waren. Indirekt verbessert sich auch die Störfestigkeit der Signale, weil die Pegel der Nutzsignale, also der Nutzechos, gegenüber gleichen Bedingungen bei bisherigen Messverfahren größer werden.

Zusätzlich können Phantomechosignale, die aufgrund von Überreichweiten entstehen, unterdrückt werden.

Die Erfindung wird nachfolgend anhand von Ausführungsbeispielen genauer erläutert und beschrieben, wobei auf die beigefügten Zeichung verwiesen wird. Dabei zeigen:
Fig. 1 eine Darstellung des zeitlichen Verlaufs eines
   herkömmlichen breitbandigen Pulsradarsignals;
Fig. 2 eine Darstellung des Frequenzspektrums des
   breitbandigen Pulsradarsignals nach Fig. 2;
Fig. 3 ein Ausführungsbeispiel einer Schaltung eines
   PN-Codegenerators nach der Erfindung;
Fig. 4 das Ausführungsbeispiel einer Schaltung
   nach der Erfindung zur Erzeugung eines Sendesignals
   mit codierter Polarität;
Fig. 5 ein Ausführungsbeispiel einer Schaltung
   zur Erzeugung eines Sendesignals
   mit codierter Polarität, das nicht Teil der Erfindung ist;
Fig. 6 ein Ausführungsbeispiel einer Schaltung
   zur Erzeugung eines Sendesignals
   mit codierter Polarität, das nicht Teil der Erfindung ist;
Fig. 7 eine Darstellung des zeitlichen Verlaufs eines
   codierten breitbandigen Pulsradarsignals;
Fig. 8 eine Darstellung des Frequenzspektrums des
   codierten breitbandigen Pulsradarsignals nach Fig. 7;
Fig. 9 eine Darstellung des zeitlichen Verlaufs eines
   nach der Erfindung polaritätscodierten
   breitbandigen Pulsradarsignals mit gegenüber
   dem in Fig. 7 dargestellten Signal verbesserter
   Codierung; und
Fig. 10 eine Darstellung des Frequenzspektrums des
   breitbandigen polaritätscodierten Pulsradarsignals
   nach Fig. 9.

Die Erfindung wird nachfolgend und ohne Einschränkung des Erfindungsgedankens anhand von Ausführungsbeispielen für eine Schaltung und ein Verfahren für eine TDR-Füllstandsmessung der industriellen Messtechnik beschrieben. Die Erfindung ist die für darüber hinaus zur Optimierung der Emission der verschiedensten breitbandigen Pulsradarverfahren geeignet.

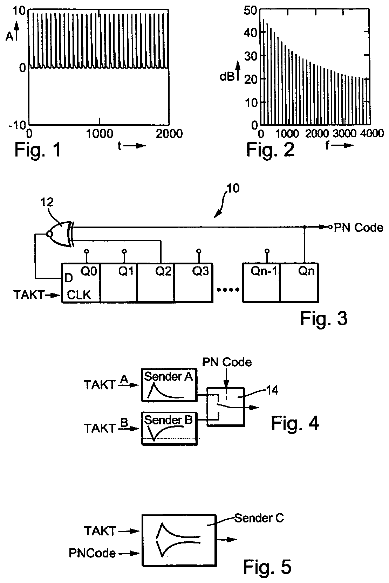

Das so genannte TDR-Meßverfahren ist eine Pulsechomethode, bei der extrem breitbandige Sendepulssignale, im Mikrowellenbereich, von einem Füllstandsmessgerät gesendet werden. Ein mit dem Füllstandsmessgerät, in dem die Sendesignale erzeugt und bearbeitet werden, verbundener Wellenleiter taucht dazu üblicherweise in das Medium ein, dessen Füllstand in einem Behälter oder Tank gemessen werden soll. Die Sendepulssignale werden auf dem Wellenleiter bis zum Medium geführt, an dessen Oberfläche sie reflektiert werden und als Nutzechosignal auf dem Wellenleiter zum Messgerät zurücklaufen. Obwohl der größte Teil der Signalenergie auf dem Wellenleiter als Nutzsignal läuft und als Nutzechosignal wieder empfangen wird, wird ein gewisser Energieanteil abgestrahlt. Je nach Signalform, Amplitude und Pulsrepetitionsfrequenz (PRF) können die Emissionswerte dabei sehr schnell vorgeschriebene bzw. zulässige Grenzwerte überschreiten und Störungen vielfältiger Art verursachen. Da bei dem TDR-Meßverfahren bisher sehr kurze positive Nadelimpulse gesendet werden, wie beispielsweise in Fig. 5 dargestellt ist, erstreckt sich das Störspektrum über mehrere Frequenzdekaden von einigen MHz bis zu einigen GHz. Das üblicherweise auftretende Spektrum besteht aus Spektrallinien deren Verlauf z.B. bei einer solchen Nadelpulsfolge nach höheren Frequenzen hin abfällt, wie Fig. 2 veranschaulicht. Der Abstand der einzelnen aufeinander folgenden Spektrallinien wird durch die Pulswiderholungsrate, auch Pulsrepetitionsfrequenz (PRF) genannt, bestimmt.

Zur Erläuterung sei angemerkt, dass in allen Diagrammen der Fig. 1, 7 und 9 der zeitliche Verlauf von Signal-Amplituden ***A*** gegen eine Zeit ***t*** aufgetragen ist. In den dazugehörenden Fig. 2, 8 und 10 ist jeweils das zu den Signalen der Fig. 1, 7 und 9 gehörende Frequenzspektrum veranschaulicht, d.h. der Betrag der Signale in ***dB*** ist gegen die Frequenz ***f*** aufgetragen.

Wie oben beschrieben, zielt die Erfindung darauf ab, breitbandige Sendepulssignale, beispielsweise TDR-Sendepulse, die mit der Pulsrepetitionfrequenz PRF gesendet werden, zu optimieren. Dazu wird die Polarität der Sendepulse mit jedem PRF-Zyklus gemäß einer Zufallsfolge umgeschaltet. Es hat sich gezeigt, dass jene Zufallsfolgen am effektivsten sind, die statistisch gleich verteilte Werte aufweisen. Die bekannteste Zufallsfolge dieser Art und die einfach digital realisierbar ist, ist die so genannte PN-Codierung. PN steht für Pseudo-Noise, das bedeutet eine zufällige Folge aufeinander folgender 0- bzw. 1-Digitalwerte, den so genannten PN-Werten, die statistisch gleich verteilt ausgegeben werden, jedoch mit einer Periodizität. Im Prinzip handelt es sich dabei um ein digital erzeugtes Rauschen mit exakt einstellbarer Periodizität.

In Fig. 3 ist ein Ausführungsbeispiel einer solchen Schaltung eines PN-Codegenerators 10 nach der Erfindung dargestellt, mit der das erfindungsgemäße Messgerät zur Optimierung der Emission breitbandiger Sendepulse, realisiert wird. Der PN-Codegenerator 10 ist als n-stufiges Schieberegister Q mit Rückkoppelabgriffen über eine XOR-Verknüpfung 12 aufgebaut. Die einzelnen Stufen Q1 - Qn, vorzugsweise mindestens zwei Stufen, bilden das n-Bit Schieberegister mit einem Schieberegistertakt, der einen Eingangswert an einem Dateneingang **D** mit jedem Takt ***TAKT*** um eine Registerposition weiter schiebt. ***TAKT*** veranschaulicht hierbei die quartzgesteuerte Pulswiderholungsfrequenz, die ebenfalls am Schieberegister Q am Eingang **CLK** anliegt. Durch die Rückkopplung an mindestens zwei Schieberegisterausgängen über die XOR-Verknüpfung 12 wird ein Dateneingangswert D erzeugt. Ausgangsseitig wird am PN-Codegenerators 10 eine Zufallsfolge PNCode erzeugt, die als Steuersignal und Code für eine Schaltung nach der Erfindung zur Erzeugung eines Sendesignals nach den Fig. 4, 5 und 6 verwendet wird, bei der in Abhängigkeit von der Zufallsfolge PNCode die Polarität des Sendesignals umgeschaltet wird.

Grundsätzlich ist festzuhalten, dass die Periodizität, mit der sich die Zufallsfolge wiederholt von der Länge eines Schieberegisters abhängig ist. Je größer die Anzahl der Schieberegister Q1-Qn, desto länger die Zeit, bis sich die Zufallsfolge wiederholt. Für den in Fig. 3 dargestellten PN-Codegenerators 10 kann jedoch für die meisten Anwendungsfälle die Anzahl der Stufen Ql-Qn und damit die Schieberegisterlänge so gewählt werden, dass die resultierende Zufallsfolge als nicht periodische Folge betrachtet werden kann. Zufallsfolgen mit z.B. Gaussverteilung oder andere statistisch nicht gleich verteilte Folgen sind zwar möglich, aber nicht so effektiv. Als besonders effektiv hat sich jedoch ein Schieberegister Q mit einer Bitbreite von 9 Bit, also neun Registerstufen Q1-Q9, gezeigt, mit dem eine Zufallsfolge PNCode mit einer Länge von 511 nahezu gleich verteilten 0- bzw. 1-Takten erzeugt werden kann: 254 pos. Werte, 255 neg. Werte.

Die eigentliche Schaltung nach der Erfindung zur Erzeugung eines breitbandigen Sendesignals mit einer durch die im PN-Codegenerators 10 (sie Fig. 3) erzeugten Zufallsfolge PNCode codierten Polarität ist auf verschiedene Weise realisierbar. Ausführungsbeispiele dazu sind in den Fig. 4, 5 und 6 dargestellt. Entweder werden dazu zwei Sendesignalgeneratoren ***Sender A*** und ***Sender B***, verwendet, die jeder ein Sendesignal mit unterschiedlicher Polarität erzeugen oder ein einzelner Sendesignalgenerator ***Sender C*** mit umschaltbarer Polarität.

Die Umschaltung erfolgt bei der in Fig. 4 dargestellten Schaltung durch einen Umschalter 14, der in Abhängigkeit des an ihm anliegenden Polaritätscodes PNCode zwischen den Ausgänge der beiden Sendesignalgeneratoren ***Sender A*** und ***Sender B*** hin- und herschaltet. Eingangsseitig liegt an den Sendesignalgeneratoren ***Sender A*** und ***Sender B*** die Pulswiderholungsfrequenz ***TAKT*** an.

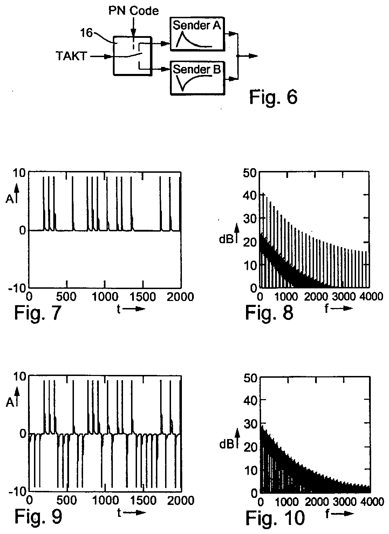

Bei der in Fig. 6 dargestellten Schaltung wird ein Umschalter 16 auf die Eingänge der Sendesignalgeneratoren ***Sender A*** und ***Sender B*** geschaltet, der in Abhängigkeit des an ihm anliegenden Polaritätscodes PNCode zwischen den Eingänge der beiden Sendesignalgeneratoren ***Sender A*** und ***Sender B*** hin- und herschaltet.

Anders verhält es sich mit der in Fig. 5 dargestellten Schaltung. Hier wird Polaritätscode PNCode direkt auf den Eingang des in seiner Polarität umschaltbaren Sendesignalgenerator ***Sender C*** gegeben.

Die Fig. 7 - 10 veranschaulichen die deutliche Reduzierung der Emmissionswerte der mit der Erfindung erzeugten polaritätscodierten breitbandigen Sendesignale. Bei einem PN-Wert der in dem PN-Codegenerator 10 (siehe dazu Fig. 3) erzeugten Zufallsfolge PNCode steht ausgangsseitig an den Schaltungen nach den Fig. 4-6 ein positiver Sendepuls an, bei einem PN-Wert = 0 wird ein Puls gleicher Pulsform, aber mit negativer Polarität ausgegeben. Diese Situation ist Fig. 9 dargestellt.

Es ist aber auch möglich, nicht nur die Polarität der Sendesignale codiert umzuschalten, sondern entsprechend einer Zufallsfolge ***PNCode*** Pulse zu unterdrücken. Die besondere Wirkung eines solchen Verfahrens lässt sich auch am Beispiel einer Nadelpulsfolge als Sendesignale in Fig. 7 zeigen. Im Vergleich mit einer herkömmlichen uncodierten Nadelpulsfolge nach Fig. 1 und dem in Fig. 2 dargestellten Emmissionsspektrum zeigt sich bei dem in Fig. 8 dargestellten Betrags- bzw. Emmissionsspektrum zur codierten Nadelpulsfolge nach Fig. 7 bereits eine deutliche Reduzierung der Emmissionswerte.

Noch deutlicher wird der Effekt der Optimierung der Emmissionswerte in den Fig. 9 und 10, die eine nach der Erfindung polaritätscodierte Pulsfolge darstellen. Die hier darstellten Signale wurde mithilfe eines PN-Codegenerator 10 nach Fig. 3 mit einem 7-Bit-Schieberegister erzeugt. In Fig. 9 sind deutlich die durch die polaritätscodierte Pulsfolge aus negativen und positiven Pulsen zu sehen. Das dazugehörige Betrags- bzw. Emmissionsspektrum in Fig. 10 zeigt, dass der Absolutpegel der Emission drastisch gesenkt worden ist.

Für alle beschriebenen Sendsignale hat sich gezeigt, dass es vorteilhaft sein kann, wenn die Pulsrepetitionfrequenz ***TAKT*** konstant oder zusätzlich verjittert ist.

## Patentansprüche

1. Füllstandsmessgerät zur Bestimmung des Füllstands eines Mediums in einem Behälter, wobei das Füllstandsmessgerät breitbandige Sendepulse mit einer vorgewählten Pulsrepetitionsfrequenz (PRF) sendet und den Füllstand über ein Pulsechoverfahren bestimmt,
wobei eine Schaltung zur Optimierung der Emission der breitbandigen Sendepulse vorgesehen ist, die folgende Komponenten umfasst:
zwei Sendesignalgeneratoren (*Sender A, B*), an deren Eingängen eine Taktrate (TAKT) zur Steuerung der Pulswiederholfrequenz anliegt,
wobei der Sendesignalgenerator (Sender A) und der Sendesignalgenerator (Sender B) so ausgestaltet sind, dass sie Sendesignale mit unterschiedlicher Polarität erzeugen,
einen Umschalter (14), der mit den Ausgängen der beiden Sendesignalgeneratoren (*Sender A, B*) verbunden ist, und
eine Codegeneratorschaltung (10), die eine Zufallsfolge (PNCode) erzeugt,
die an dem Umschalter (14) anliegt,
wobei der Umschalter (14) derart eingerichtet ist, in Abhängigkeit von der anliegenden Zufallsfolge (PNCode) zwischen den Ausgängen der beiden Signalgeneratoren (Sender A, B) hin- und herzuschalten.

2. Füllstandsmessgerät nach Anspruch 1, wobei die Pulsrepetitionfrequenz (***TAKT***) konstant ist.

3. Füllstandsmessgerät nach Anspruch 1 oder 2, wobei die Pulsrepetitionfrequenz (***TAKT***) zusätzlich verjittert ist.

4. Füllstandsmessgerät nach Anspruch 1, 2 oder 3, wobei die Pulsform der Sendepulse beliebig ist.

5. Füllstandsmessgerät nach Anspruch 1, wobei die Codegeneratorschaltung (10) ein mehrstufiges Schieberegister (Q1-Qn) mit Rückkoppelabgriffen umfasst.

6. Füllstandsmessgerät nach Anspruch 5, wobei die Codegeneratorschaltung (10) eine XOR-Verknüpfung für die Rückkoppelabgriffe umfasst.

7. Füllstandsmessgerät nach Anspruch 1, wobei es sich bei dem Füllstandsmessgerät um ein TDR-Füllstandsmessgerät handelt.

## Claims

1. Level transmitter for determining the level of a medium in a container, wherein the level transmitter transmits broadband transmission pulses with a preselected pulse repetition frequency (PRF) and determines the level via a pulse echo procedure,
wherein a circuit is provided for the optimization of the emission of broadband transmission pulses, said circuit comprising the following components:
two transmission signal generators (transmitter A, B) at whose inputs a clock rate (TAKT) is applied to control the pulse repetition frequency, wherein the transmission signal generator (transmitter A) and the transmission signal generator (transmitter B) are designed in such a way that they generate transmission signals with a different polarity,
a changeover switch (14), which is connected to the outputs of the two transmission signal generators (transmitter A, B), and a code generator circuit (10), which generates a random sequence (PNCode) which is present at the changeover switch (14),
wherein the changeover switch (14) is set up to switch back and forth between the outputs of the two signal generators (transmitter A, B) depending on the random sequence (PNCode) that is present.

2. Level transmitter as claimed in Claim 1, wherein the pulse repetition rate (TAKT) is constant.

3. Level transmitter as claimed in Claim 1 or 2, wherein the pulse repetition rate (TAKT) is additionally jittered.

4. Level transmitter as claimed in Claim 1, 2 or 3, wherein the transmission pulses can have any pulse form.

5. Level transmitter as claimed in Claim 1, wherein the code generator circuit (10) comprises a multi-stage shift register (Q1-Qn) with feedback taps.

6. Level transmitter as claimed in Claim 5, wherein the code generator circuit (10) comprises an XOR logic for feedback taps.

7. Level transmitter as claimed in Claim 1, wherein the level transmitter is a TDR level transmitter.

## Revendications

1. Transmetteur de niveau destiné à la détermination du niveau d'un produit dans un réservoir, le transmetteur de niveau émettant des impulsions d'émission de large bande à une fréquence de répétition d'impulsion (PRF) présélectionnée et déterminant le niveau par le biais d'un procédé d'écho d'impulsion,
pour lequel est prévu un circuit destiné à l'optimisation de l'émission des impulsions d'émission de large bande, qui comprend les composants suivants :
deux générateurs de signaux d'émission (Sender A, B), aux entrées desquels est appliquée une fréquence d'horloge (TAKT) pour la commande de la fréquence de répétition d'impulsion, le générateur de signaux d'émission (Sender A) et le générateur de signaux d'émission (Sender B) étant conçus de telle sorte à générer des signaux d'émission de polarité différente,
un commutateur (14), lequel est relié avec les sorties des deux générateurs de signaux d'émission (Sender A, B), et un circuit générateur de code (10), lequel génère une séquence aléatoire (PNCode), présente au niveau du commutateur (14), le commutateur (14) étant conçu de telle sorte à commuter entre les sorties des deux générateurs de signaux (Sender A, B) en fonction de la séquence aléatoire (PNCode) présente.

2. Transmetteur de niveau selon la revendication 1, pour lequel la fréquence de répétition d'impulsion (TAKT) est constante.

3. Transmetteur de niveau selon la revendication 1 ou 2, pour lequel la fréquence de répétition d'impulsion (TAKT) est en plus mise en gigue.

4. Transmetteur de niveau selon la revendication 1, 2 ou 3, pour lequel la forme des impulsions d'émission est quelconque.

5. Transmetteur de niveau selon la revendication 1, pour lequel le circuit générateur de code (10) comprend un registre à décalage à plusieurs étages (Q1-Qn) avec prises de contre-réaction.

6. Transmetteur de niveau selon la revendication 5, pour lequel le circuit générateur de code (10) comprend une fonction XOR pour les prises de contre-réaction.

7. Transmetteur de niveau selon la revendication 1, pour lequel il s'agit, concernant le transmetteur de niveau, d'un transmetteur de niveau TDR.
